# EUROPEAN PATENT APPLICATION

(11) **EP 2 933 323 A1**
(43) Date of publication of application: **21.10.2015**
(21) Application number: 15460011.8
(22) Date of filing: 10.04.2015
(51) Int. Cl.: C12C 11/11, C12C 5/00

(54) **SOLUBLE NON-STARCHY BIOPOLYMERS USAGE IN MANUFACTURING OF BEVERAGES CONTAINING ALCOHOL**

(30) Priority: 14.04.2014 PL 40790014
(71) Applicant: Harasym, Joanna, 52-210 Wroclaw (PL)
(72) Inventor: Harasym, Joanna, 52-210 Wroclaw (PL)

(57) **Abstract**

The invention relates to the usage of soluble non-starchy biopolymer in the form of a solution or powder for an inhibition of the absorption of sugars and/or fats from the human gastrointestinal tract after ingestion of alcohol-containing beverages, particularly fermented ones such as beer, wines and ciders. Preferred biopolymers are selected from the group of polysaccharides which are natural products in pure form or mixtures, of said as being particularly useful beta-glucan from cereals, inulin, fructooligosaccharides and chitosan were selected. The quantities used polysaccharides are in the range from 0.01 to 50 mass %.

## Description

The present invention relates to the usage of soluble non-starchy biopolymers in the manufacturing of beverages containing alcohol. The invention is used in the food industry in the beverages containing alcohol production. This solution is particularly useful in the production of alcoholic beverages with a high content of extract, among which high content of sugar and/or fat, as the physical properties and consistency of the dissolved biopolymer present in the beverage reduces the absorption of sugars and/or fat from the gastrointestinal tract, which is an important feature for the persons with imbalanced metabolism of carbohydrates and / or fats.

Biopolymers are natural polysaccharides of high molecular weight obtained as a result of isolation and separation processes of the plant, bacteria, fungi and animal organisms.

It is known from prior art (Polish patent PL215214) the usage of biopolymers in the ethanol fermentation of broths and high sugar content worts during the production of alcoholic beverages by specially selected yeast strains and/or other microorganisms in fermentation process. It was found that the addition to the honey wort of colloidal form of polysaccharides such as agar, gellan gum, arabic gum, ghatti gum, karaya gum or xanthan accelerates fermentation and increases the degree of attenuation of wort. This solution is particularly useful in the production of meads to increase the degree of attenuation of the wort, and obtaining a higher concentration of ethanol in the product.

It is also known from the prior art the manufacturing of the fruit and vegetable beverages with enhanced nutritional value by the addition of glucan, in particular beta-glucan from oats (US Patent US6020016) in an amount of 0.01 to 5 grams per liter. Beverages are prepared by mixing a fruit or vegetable juice concentrate or in solid form, grains, sweetener, flavor, colorant, food acid, stabilizer, and glucan. The solution provides fruit and vegetable juices with improved nutritional value by adding cereal grains.

The production process of containing alcohol beverages, which uses natural sources of carbon and enzymes like cereal malt, permanently struggles with problems created by non-starchy polysaccharides in the process of mashing. The natural gelling property obstructs access of enzymes to the raw starch, which results in obtaining low extract in wort. Therefore, these polysaccharides are considered unfavorable and many efforts are dedicated to remove them in the manufacturing process of alcohol-containing beverages, especially fermented like beer, wine or cider.

In the literature concerning the manufacturing of beverages containing alcohol particularly fermented type as beer, wine or cider there is no information about the usage of biopolymers to reduce the adverse effects of this type of drinks on the human body. It is particularly important to reduce the impact of sugar (commonly forming flavor) in a wide range of beverages containing alcohol, which is also in the composition of fermented beverages such as beer, wine, especially sweetened or ciders as a residue of the raw material.

There are recommendations, known for the Scientific Opinions of the European Food Safety Authority, for the use of health claims on products based on the active additives and their concentration in the product. Thus, for beta-glucan from oats and barley concentration of the polysaccharide in the product, which can reduce the level of triglycerides in the blood and normalize cholesterol levels in the blood should be adequate to provide min. 3 g of beta-glucan per day, and in order to reduce the peak of the sugar product should provide 4 g of beta-glucan per 30 g of available carbohydrate. In case of ingestion of chitosan should also ensure the supply in an amount of 3 g per day to reduce the level of triglycerides. In the case of inulin and fructooligosaccharides already addition of 20 % of the polysaccharides instead of sugar significantly reduces the sugar peak in blood after ingestion.

Surprisingly, it is possible to use biopolymers in amounts known to be physiologically active without loss of sensory quality so obtained alcoholic beverages, particularly fermented ones such as beer, wines and ciders. This is a novelty, since these drinks are considered as stimulants and rarely attention is paid to them in terms of increasing their health-promoting properties.

The invention relates to the use of biopolymer in the form of a solution or powder for an inhibiton of the absorption of sugars and/or fats from the human gastrointestinal tract after ingestion of alcohol-containing beverages, particularly fermented such as beer, wines and ciders.

Preferred biopolymers are selected from the group of polysaccharides which are natural products in pure form or mixtures, of being particularly useful are selected as beta-glucan from cereals, inulin, fructooligosaccharides and chitosan.

The essential feature of the invention is a new use of biopolymer in alcoholic beverages, particularly fermented to beer, wine and ciders as a substance for the absorption of sugars and/or fats while maintaining the sensory product parameters (such as taste, smell, bitterness, foaming or CO₂ saturation) values analogous to the typical, well-known to the consumer.

The invention is explained in the examples.

### Example 1

Adjustable beer wort was obtained by conventional methods from barley malt. After inoculation with the upper fermentation yeast Saccharomyces cerevisiae the broth was subjected to primary fermentation in a fermentor. After completion of the primary fermentation the subsequent polysaccharides were added to the wort: oat beta-glucan, beta-glucan from barley, inulin, fructooligosaccharides, or chitosan in an amount corresponding to 6 g dw / L. Bottling and aging in bottles was conducted. After maturing time the beer was obtained with extract content of 13% and then the sensory attributes and the reduction in blood glucose after consumption of beer with the addition of the polysaccharides relatively to a control beer produced according to the procedure described above without addition of polysaccharides (Table 1) were tested.

**Table 1 Sensory characteristics of beer with addition of the polysaccharides according to the invention, and increase in blood glucose after consumption of beer with respect to the control beer and the product reference with respect to the recommendations for reducing the level of triglycerides in the blood.**

| polysaccharide | oat beta-glucan | barley beta-glucan | fructooligo-saccharides | inulin | chitosan |
|---|---|---|---|---|---|
| foaming | 3/5 | 3/5 | 4/5 | 4/5 | 3/5 |
| clarity | 4/5 | 4/5 | 4/5 | 4/5 | 4/5 |
| color | 4/5 | 4/5 | 4/5 | 4/5 | 4/5 |
| CO₂ saturation | 3/5 | 3/5 | 4/5 | 4/5 | 3/5 |
| taste and smell | 5/5 | 5/5 | 4/5 | 4/5 | 4/5 |
| sugar level in blood * | 110/135 | 110/135 | 100/135 | 100/135 | 120/135 |
| triglyceride level reduction in correspondenc e to EFSA | with intake of 3g per day it relates to 0,5 l of beer due to invention | with intake of 3g per day it relates to 0,5 l of beer due to invention | not applicable | not applicable | with intake of 3g per day it relates to 0,5 1 of beer due to invention |

| | | | | | |
|---|---|---|---|---|---|
| * measured after 30 min of ingestion in comparison to control | | | | | |

### Example 2.

The cuvee on red grapes was made by conventional methods, After completion of fermentation, the wine was blended by the addition of sugar and beta-glucan from oats, beta-glucan from barley, inulin, fructooligosaccharides or the chitosan in an amount corresponding to 3 g dw / L. Obtained wine with a sugar content of 10 g/l was bottled and maturation in bottles was conducted. After maturing the examination of sensory attributes arid the reduction in blood glucose after consumption of wine with the addition of polysaccharides with respect to the control wine intake, prepared according to the procedure described above without addition of polysaccharides was conducted. The results are presented in Table 2.

**Table 2. Sensory characteristics of wine with the addition of the polysaccharides according to the invention, and increase in blood glucose after consumption of beer with respect to fault control and the product reference with respect to the recommendations for reducing the level of triglycerides in the blood.**

| polysaccharide | oat beta-glucan | barley beta-glucan | fructooligosaccharides | inulin | chitosan |
|---|---|---|---|---|---|
| clarity | 4/5 | 4/5 | 4/5 | 4/5 | 4/5 |
| color | 4/5 | 4/5 | 4/5 | 4/5 | 4/5 |
| taste and smell | 5/5 | 5/5 | 4/5 | 4/5 | 4/5 |
| sugar level in blood * | 110/135 | 110/135 | 100/135 | 100/135 | 120/135 |
| triglyceride level reduction in | with intake of 3g per day it | with intake of 3g per day it relates to 1 l | not applicable | not | with intake of 3g per day it relates to 1 l |
| correspondence to EFSA | relates to 1 l of wine due to invention | of wine due to invention | | applicable | of wine due to invention |

| | | | | | |
|---|---|---|---|---|---|
| * measured after 30 min of ingestion in comparison to control | | | | | |

### Example 3.

Egg liqueur (Advocaat) was manufactured by conventional methods. After completion of the cream composition its health promoting activity was raised by the addition of beta-glucan from oats, beta-glucan from barley, inulin, fructooligosaccharides or chitosan in an amount of 30 g dm / l. Bottling and conditioning in bottles at a temperature of 10 ° C were conducted. After maturing time the study was conducted verifying the sensory attributes and the reduction of glucose in blood after ingestion of egg liqueur containing polysaccharides with respect to the control liqueur, prepared according to the procedure described above without addition of polysaccharides. The results are presented in Table 3.

**Table 3. Characteristics of the sensory attributes of liqueur containing polysaccharides according to the invention, and increase in blood glucose after consumption of egg liqueur in comparison to control liqueur, and the product reference with respect to the recommendations of EFSA for reducing the level of triglycerides in the blood.**

| polysaccharide | oat beta-glucan | barley beta-glucan | fructooligosaccharides | inulin | chitosan |
|---|---|---|---|---|---|
| color | 4/5 | 4/5 | 4/5 | 4/5 | 4/5 |
| taste and smell | 5/5 | 5/5 | 4/5 | 4/5 | 4/5 |
| sugar level in blood * | 100/135 | 100/135 | 95/135 | 95/135 | 100/135 |
| triglyceride level reduction in correspondence to EFSA | with intake of 3g per day it relates to 100 ml of liqueur due to invention | with intake of 3g per day it relates to 100 ml of liqueur due to invention | not applicable | not applicable | with intake of 3g per day it relates to 100 ml of liqueur due to invention |

| | | | | | |
|---|---|---|---|---|---|
| * measured after 30 min of ingestion in comparison to control | | | | | |

## Claims

1. The usage of a soluble non-starchy biopolymer in the dry form or as solution in the production of alcohol-containing beverages, particularly fermented such as beer, wine and ciders as a means of limiting the absorption of sugars and/or fats after drink ingestion from the human gastrointestinal tract.

2. The usage of biopolymer according to claim 1, wherein the alcohol content in beverage is from 0,01 to 70,0 mass %.

3. The usage of biopolymer according to claim 1, wherein the concentration of biopolymer particles in a beverage is from 0,05 to 50,0 mass %.

4. The usage of biopolymer according to claim 1, wherein the biopolymer is delivered to an alcohol-containing beverages, particularly fermented ones after completion of primary fermentation.

5. The usage of biopolymer according to claim 1, wherein the biopolymer is delivered to fully attenuated wort or beverage containing alcohol prior to the final filling stage.

6. The usage of biopolymer according to claim 1, wherein the biopolymer is a 1-3, 1-4 beta-D-glucan derived from cereals in form of an extract or a gum isolated from plant, pure or in mixtures.

7. The usage of biopolymer according to claim 6, wherein the biopolymer used is cereal 1-3, 1-4 beta-D-glucan from oats or barley.

8. The usage of biopolymer according to claim 1, wherein the biopolymer is inulin in the form of an extract or a gum isolated from plant, pure or in mixtures.

9. The usage of biopolymer according to claim 1, wherein the biopolymer are fructooligosaccharides in the form of extract or gum isolated from plants, pure or in mixtures.

10. The usage of biopolymer according to claim 1, wherein the biopolymer is chitosan as an extract or gum, pure or in mixtures.
